# EUROPEAN PATENT SPECIFICATION

(11) **EP 2 902 829 B1**
(45) Date of publication and mention of the grant of the patent: **20.03.2019**
(21) Application number: 15152987.2
(22) Date of filing: 29.01.2015
(51) Int. Cl.: G02B 7/02

(54) **Sensor head for optical measurement device capable of high accurate measurement in a vacuum environment**
Sensorkopf für optische Messeinrichtung mit hoher Messgenauigkeit in Vakuumumgebung
Tête de capteur pour appareil de mesure optique capable d'effectuer des mesures de haute précision dans un environnement sous vide

(30) Priority: 31.01.2014 JP 2014017045
(43) Date of publication of application: 05.08.2015
(73) Proprietor: OMRON CORPORATION, Kyoto-shi, Kyoto 600-8530 (JP)
(72) Inventor: Horie, Masaru, Kyoto-shi, Kyoto 600-8530 (JP); Okuda, Takahiro, Kyoto-shi, Kyoto 600-8530 (JP); Takashima, Jun, Kyoto-shi, Kyoto 600-8530 (JP)
(74) Representative: Global IP Europe Patentanwaltskanzlei

(56) References cited:
- WO-A2-03/052481
- US-A- 3 498 695
- US-A- 4 616 908
- US-A1- 2004 027 565
- US-A1- 2008 068 733
- US-A1- 2009 244 735

## Description

### FIELD

The present invention relates to a sensor head for an optical measurement device.

### BACKGROUND

Optical measurement devices using an optical system to measure the displacement and the like of a measurement object are known as exemplified in Patent Literature 1. The optical measurement device may, for example, be equipped with a controller, a cable member for transmitting light, and a sensor head connected to the controller via the cable member. The controller includes a light source. The light from the light source irradiates the measurement object via the cable member and the sensor head. The controller then receives light reflected from the measurement object via the sensor head and the cable member.

The above-described optical measurement device is sometimes used to measure a measurement object placed in a vacuum environment. Traditionally, the measurement object is placed inside a chamber that has a vacuumed environment; the measurement object is then measured using a sensor head arranged outside the chamber. The chamber may be provided with a viewport made of glass and the like. The light emitted from the sensor head passes through the viewport and is emitted onto the measurement object, and the light reflected from the measurement object passes through the viewport and is received at the sensor head.
US 2008/0068773 A1 discloses a camera module comprising a lens module including a barrel, a plurality of lenses and at least one spacer disposed between each pair of neighboring lenses, wherein the lenses and the spacer are received in the barrel, at least one through hole is defined in a sidewall of the barrel, the at least one spacer is provided with a channel communicating an inner space between the corresponding pair of neighboring lenses with outside of the barrel via at least one through hole.
USP 4 616 908 discloses an optical system comprising a retile holder; a wafer stage; a lens for projecting an image of a reticle held in a holder onto a wafer held on a stage, the lens comprising a plurality of spaced refractor elements and tubular lens holder means for supporting and enclosing the elements, the holder means being essentially sealed to the two endmost of the elements, the interior spaces between successive elements being vented to each other; first port means communicating with the interior of the holder means between one endmost element and the respective adjacent element; and second port means communicating with the interior of said holder means between the other endmost element and the respective adjacent element.

### CITATION LIST

### PATENT LITERATURE

PATENT LITERATURE 1: Japan Laid-open Patent Application Publication No. 2012-208102

### SUMMARY

### Technical Problem

However, when the sensor head is arranged outside the chamber as above mentioned, there is a large distance between the sensor head and the measurement object. This impedes high accuracy measurement. Additionally, a complicated configuration task is required according to the thickness, or the material of the viewport. Moreover, if the shape of the chamber deforms due to evacuation, the deformation of the chamber may decrease the measurement accuracy.

Thus, measurements are preferably performed with a sensor head arranged inside the chamber to address the above-mentioned kinds of disadvantages. However, an airtight space inside the sensor head housing results in a pressure being exerted on the housing due to the vacuum. Should the housing deform due to this pressure, the accuracy of the measurement decreases.

The present invention proposes a sensor head used in an optical measurement device capable of highly accurate measurement even in a vacuum environment.

### Solution to Problem

A sensor head according to first aspect of the invention is defined in the appended claim 1. The sensor head is used in an optical measurement device and is configured to connect to a controller via a member that transmits light. The sensor head is provided with a housing, and a first lens arranged inside the housing. The housing includes a first through hole communicating with a space inside the housing.

In the sensor head according to this aspect, the space inside the housing communicates with an external vacuum via the first through hole. This reduces the pressure the vacuum exerts on the housing. Highly accurate measurements may thus be carried out under a vacuum environment.

The housing of the sensor head according to the first aspect of the present invention includes a second optical path space through which light passes. The first through hole communicates with the second optical path space and passes through the housing in a direction intersecting with a direction parallel to an optical axis. Therefore light entering from the outside through the first through hole has less of an effect on the measurement. Consequently, this can prevent the measurement accuracy from decreasing even when the first through hole is provided to communicate with the optical path space.

The housing of the sensor head according to the first aspect of the present invention includes a first cover part and a housing body. The first cover part includes a transparent member arranged to intersect with an optical axis. The first cover part covers the first lens. The first cover part is attached to the housing body. The first through hole is provided in the housing body. The first cover part may be arranged facing the measurement object to thereby act as a light receiving surface for receiving the light reflected from the measurement object. Alternatively, the first cover part may be a light projecting surface allowing light emitted to the measurement object to pass therethrough. Therefore, providing the first through hole in the housing body and not in the first cover part, ensures that light entering from outside through the first through hole exerts little effect on the measurement. Consequently, this can prevent a decrease in the measurement accuracy.

The first lens of the sensor head according to the first aspect of the present invention is arranged to partition the optical path space within the housing into a first optical path space and the second optical path space. The first optical path space is located between the first cover part and the first lens. The first through hole is provided to communicate with the second optical path space. In this case the first optical path space is closer to the measurement object than the second optical path space. Therefore, providing the first through hole to communicate with the second optical path space and not the first optical path space ensures that light entering from outside through the first through hole exerts little effect on the light passing through the optical path space. Consequently, this can prevent a decrease in the measurement accuracy.

The sensor head according to the first aspect of the present invention is further provided with a lens holder. The lens holder is located between an inner surface of the housing and the first lens, and holds the first lens. The lens holder includes a first communicating part for communicating the first optical path space and the second optical path space.

In this case the first optical path space communicates with the second optical path space via the first communicating part. Accordingly, the first optical path space communicates with an external vacuum via the first communicating part, the second optical path space, and the first through hole. Therefore, the first optical path space may communicate with an external vacuum without providing a through hole in the first cover part. Thus, this can prevent a decrease in the measurement accuracy while limiting the pressure exerted on the housing due to the vacuum.

The first communicating part is a groove that may be provided in an outer peripheral surface of the lens holder extending along a central axis direction of the lens holder. Therefore, a simply structured lens holder can be used to communicate the first optical path space and the second optical path space.

The sensor head according to the first aspect of the present invention is further provided with a first lens fitting part that has a ring shape. The first lens fitting part secures the first lens to the lens holder. A male screw is provided on an outer peripheral surface of the first lens fitting part. A female screw is provided on an inner peripheral surface of the lens holder. Fastening together the male screw of the first lens fitting part and the female screw of the lens holder secures the first lens to the lens holder. Therefore, the first lens may be secured to the lens holder without using adhesive materials. Thus, the generation of outgas in the vacuum environment can be suppressed compared to when the first lens is secured to the lens holder with adhesive material.
The sensor head according to the first aspect of the present invention is further provided with a first lens ring arranged between the first lens and the first lens fitting part. The first lens fitting part includes a second communicating part. The second communicating part is for communicating a gap with the second optical path space. The gap is created by the lens holder, the first lens, the first lens ring, and the first lens fitting part being fitted together. Therefore, the gap created by fitting the lens holder, the first lens, the first lens ring, and the first lens fitting part together may be made a vacuum due to the second communicating part.

A second aspect of the present invention provides a sensor head for an optical measurement device and for measurement in a vacuum, the sensor head is configured to connect to a controller via a member that transmits light, the sensor head comprising: a housing; and a first lens arranged inside the housing; wherein the housing includes a first through hole communicating with a space within the housing; the housing includes a second optical path space through which light passes; the first through hole communicates with the second optical path space and passes through the housing in a direction intersecting with a direction parallel to an optical axis of the first lens; the housing includes: a first cover part covering the first lens and including a transparent member arranged intersecting with the optical axis; and a housing body to which the first cover part is attached; the first through hole is provided in the housing body; the first lens is arranged to partition the optical path space within the housing into a first optical path space and the second optical path space; the first optical path space is located between the first cover part and the first lens; and the first through hole is provided communicating with the second optical path space.
The sensor head according to the second aspect of the present invention is further provided with a first lens fitting part that has a ring shape. The first lens fitting part secures the first lens to the housing. A male screw is provided on an outer peripheral surface of the first lens fitting part. A female screw is provided on an inner peripheral surface of the housing. Fastening together the male screw of the first lens fitting part and the female screw of the housing secures the first lens to the housing. Therefore, the first lens may be secured to the housing without using adhesive materials. Thus, the generation of outgas in the vacuum environment can be suppressed compared to when the first lens is secured to the housing with adhesive material.

The sensor head according to the second aspect of the present invention is further provided with a first lens ring arranged between the first lens and the first lens fitting part. The first lens fitting part includes a second communicating part. The second communicating part is for communicating a gap with the second optical path space, the gap being created by the housing, the first lens, the first lens ring, and the first lens fitting part being fitted together. Therefore the gap created by fitting the first lens, the first lens ring, and the first lens fitting part together may be made a vacuum due to the second communicating part.

The second communicating part of the sensor head according to the second aspect of the present invention may be a groove provided in an outer peripheral surface of the first lens fitting part extending along a central axis direction of the first lens fitting part. Therefore the simply structured first lens fitting part may communicate the gap created by the first lens, the first lens ring, and the first lens fitting part being fitted together.

Any one of the sensor heads mentioned above may be further provided with a second lens. The second lens may be arranged to partition the optical path space into a second optical path space and a third optical path space. The housing may further include a second through hole communicating with the third optical path space. In this case, the second optical path space communicates with the external vacuum via the first through hole. The third optical path space communicates with the external vacuum via the second through hole. This reduces the pressure the vacuum exerts on the housing.

The sensor head with the second lens mentioned above may be further provided with a second lens fitting part that has a ring shape. The second lens fitting part secures the second lens to the housing. A male screw may be provided on an outer peripheral surface of the second lens fitting part. A female screw may be provided on an inner peripheral surface of the housing. Fastening together the male screw of the second lens fitting part and the female screw of the housing secures the second lens to the housing. Therefore, the second lens may be secured to the housing without using adhesive materials. Thus, the generation of outgas in the vacuum environment can be suppressed compared to when the second lens is secured to the housing with adhesive material.

The sensor head with the second lens fitting part mentioned above may be further provided with a second lens ring arranged between the second lens and the second lens fitting part. The second lens fitting part includes a third communicating part. The third communicating part is for communicating a gap created by the second lens, the second lens ring, and the second lens fitting part being fitted together. Therefore the gap created by fitting the second lens, the second lens ring, and the second lens fitting part together may be made a vacuum due to the third communicating part.

The third communicating part may be a groove provided in an outer peripheral surface of the second lens fitting part extending along a central axis direction of the second lens fitting part. Therefore the simply structured second lens fitting part may communicate the gap created by the second lens, the second lens ring, and the second lens fitting part being fitted together.

Any one of the sensor heads mentioned above may be further provided with a mirror member. The mirror member bends the optical axis. The housing may further include a second cover part for covering the mirror member. The mirror member is arranged to partition the second optical path space and an exoptical path space. The exoptical path space is a path space that is not the optical path space. The exoptical path space is located between the mirror member and the second cover part. The second cover part includes a third through hole communicating with the exoptical path space. In this case, the sensor head may have a compact size in the up and down direction, and the sensor head may be easily installed in the device using the sensor head. The exoptical path space partitioned from the optical path space by the mirror member communicates with the external vacuum via the third through hole. This reduces the pressure the vacuum exerts on the housing. Given that the mirror member partitions the exoptical path space from the optical path space, the light entering into the exoptical path space from the outside through the third through hole has little effect on the light passing through the optical path space. This prevents the measurement accuracy from decreasing even when the third through hole is provided in the second cover part.

The optical measurement device in any one of the sensor heads mentioned above may be a confocal measurement device that measures the displacement of a measurement object using a confocal optical system. In this case, highly accurate measurements may be carried out using a confocal optical system. Additionally, the pressure exerted on the housing due to the vacuum may be reduced to thereby maintain the precise layout of the housing, which is required for highly accurate measurement by a confocal optical system.

A sensor head according to a reference example for the invention is provided with a housing, and a first lens arranged inside the housing. The housing includes a first through hole communicating with a space inside the housing.

In the sensor head according to this reference example, the space inside the housing communicates with an external vacuum via the first through hole. This reduces the pressure the vacuum exerts on the housing. Highly accurate measurements may thus be carried out under a vacuum environment.

The space inside the housing includes a first internal space with which the first through hole communicates, and a second internal space partitioned from the first internal space. The housing may further include a second through hole communicating with the second internal space. In this case, the first internal space communicates with the external vacuum via the first through hole. The second internal space communicates with the external vacuum via the second through hole. This reduces the pressure the vacuum exerts on the housing.

A plurality of holes may be included in the housing prevents the creation of an airtight space within the housing. In this case the space inside the housing communicates with an external vacuum via the plurality of through holes. This reduces the pressure the vacuum exerts on the housing.

### Advantageous Effects of Invention

The present invention proposes a sensor head used in an optical measurement device capable of highly accurate measurement even in a vacuum environment.

### BRIEF DESCRIPTION OF THE DRAWINGS

FIG. 1 is a schematic view illustrating an optical measurement device according to an embodiment;
Figure 2 is a perspective view of a sensor head according to a first embodiment;
Figure 3 is a perspective view of the sensor head according to a first embodiment;
Figure 4 is an exploded view of the sensor head according to a first embodiment;
Figure 5 is an exploded view of the sensor head according to a first embodiment;
Figure 6 is a cross-sectional view along the line VI-VI in FIG. 2;
Figure 7 is a cross-sectional view along the line VII-VII in FIG. 3;
Figure 8 is an exploded perspective view illustrating a fixing structure for a first lens;
Figure 9 is an exploded perspective view illustrating a fixing structure for a second lens;
Figure 10 is a cross-sectional view through a third through hole;
Figure 11 is a perspective view of a sensor head according to a second embodiment;
Figure 12 is a cross-sectional view along the line XII-XII in FIG. 11;
Figure 13 is a perspective view illustrating a fixing structure for the first lens;
Figure 14 is a perspective view illustrating a fixing structure for the second lens;

### DETAILED DESCRIPTION

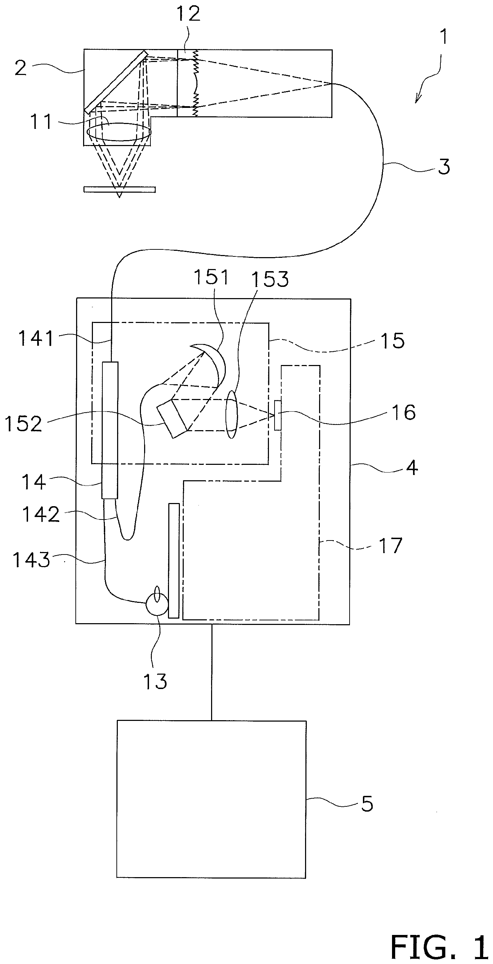

Embodiments of the invention are described below with reference to the drawings. FIG. 1 is a schematic view illustrating an optical measurement device 1 according to an embodiment. In the embodiment the optical measurement device 1 is a measurement device that measures the displacement of a measurement object using a confocal optical system.

The optical measurement device 1 includes a sensor head 2, a cable member 3, a controller 4, and a monitor 5. The sensor head 2 is optically connected to the controller 4 via the cable member 3. The cable member 3 may be, for instance, an optical fiber, and transmits light.

The sensor head 2 is equipped with a first lens 11 and a second lens 12. The first lens 11 is arranged closer to the measurement object than the second lens 12.

The first lens 11 is an objective. The second lens 12 is a diffraction lens. The second lens 12 generates a chromatic aberration in the light emitted from the light source 13 (later described) along the optical axis direction. The first lens 11 focuses the light in which the second lens 12 has generated a chromatic aberration onto the measurement object.

The front surface of the second lens 12 may have minute relief shapes such as kinoform or binary forms (step-like shape, or stepped shape) periodically formed thereon. Alternatively, the front surface of the second lens 12 may have an amplitude-modulating zone plate formed thereon, which periodically changes the transmittance of the light. Otherwise, the second lens 12 may be a compound lens including a plurality of lenses and which generates a chromatic aberration. Note, the second lens 12 is not limited to the above described configurations.

The controller 4 includes a light source 13, a branching optical fiber 14, a spectrometer 15, an imaging element 16, and a control circuit 17. The light from the light source 13 includes light having a plurality of wavelengths. In the embodiment, the light source 13 emits white light. The light source 13 may be, for example, a light emitting diode (LED). Note, the light source 13 is not limited to LEDs; another type of light source may be used (for example, super luminescent diodes: SLDs, and the like), so long as the light source is capable of emitting light having a plurality of wavelengths.

The branching optical fiber 14 includes an optical fiber 141. The optical fiber 141 is connected to the cable member 3. The branching optical fiber 14 includes two optical fibers 142, 143. The optical fiber 143 is connected to the light source 13. The optical fiber 142 is connected to the spectrometer 15. The branching optical fiber 14 guides the light emitted from the light source 13 to the cable member 3, and directs the light returning from the sensor head 2 via the cable member 3 to the spectrometer 15. Note, the branching optical fiber 14 is not limited to fibers; as long as the branching optical fiber is capable of splitting light, the branching optical fiber may be a light waveguide type splitter, or the like.

The spectrometer 15 separates the light returning from the sensor head 2 by wavelength. The spectrometer 15 includes a concave mirror 151, a diffraction grating 152, and a condenser 153. The concave mirror 151 reflects the light returning from the sensor head 2. The diffraction grating 152 is irradiated with light reflected by the concave mirror 151. The condensing lens 153 focuses the light emitted from the diffraction grating 152. Note, the spectrometer 15 is not limited to including a diffraction grating; as long as the spectrometer is capable of separating light the spectrometer may include a prism or an optical bandpass filter, or the like.

The imaging element 16 measures the intensity of the light emitted from the spectrometer 15. The imaging element 16 may be, for example, a complementary metal oxide semiconductor (CMOS), or a charge coupled device (CCD). The spectrometer 15 and the imaging element 16 in the optical measurement device 1 configure a measurement unit that measures the intensity of the light returning from the sensor head 2 for each wavelength. Note, as long as the measurement unit is capable of measuring the intensity of the light returning from the sensor head 2 for each wavelength, the measurement unit may be configured by a single imaging element such as the CCD, or the like.

The control circuit 17 is a circuit that controls the operations of the light source 13, and the imaging element 16, and the like. In addition, the control circuit 17 includes an input interface, and an output interface, which are not illustrated. Signals for adjusting the operations of the light source 13 and the imaging element 16, and the like are entered into the input interface. Signals from the imaging element 16 are output from the output interface.

The monitor 5 may be a display that can be, for example, used with a computer. The monitor 5 displays signals output from the controller 4. That is, the monitor 5 displays signals output from the imaging element 16. For instance, the monitor 5 may draw a spectral waveform of the light returning from the sensor head 2 to display a displacement of the measurement object.

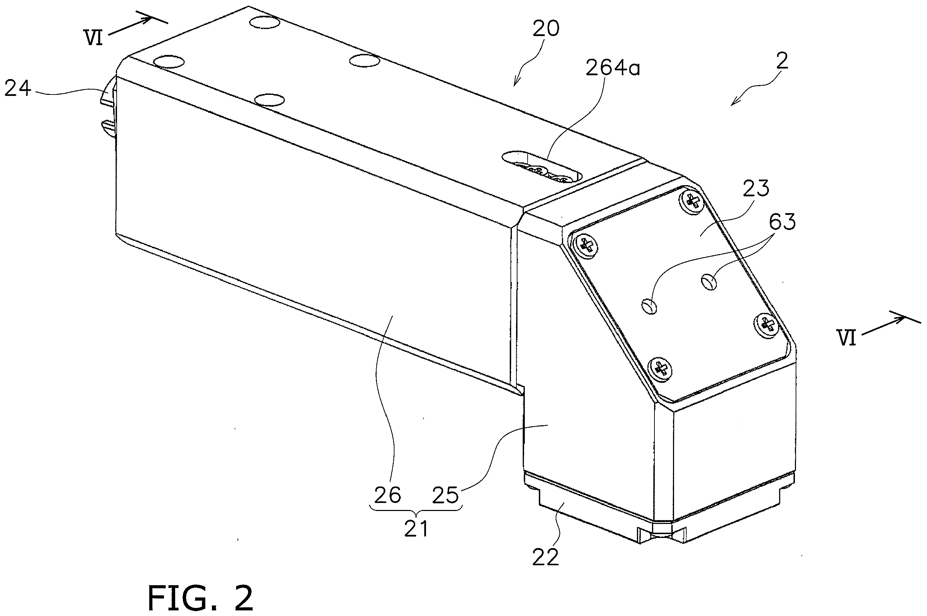

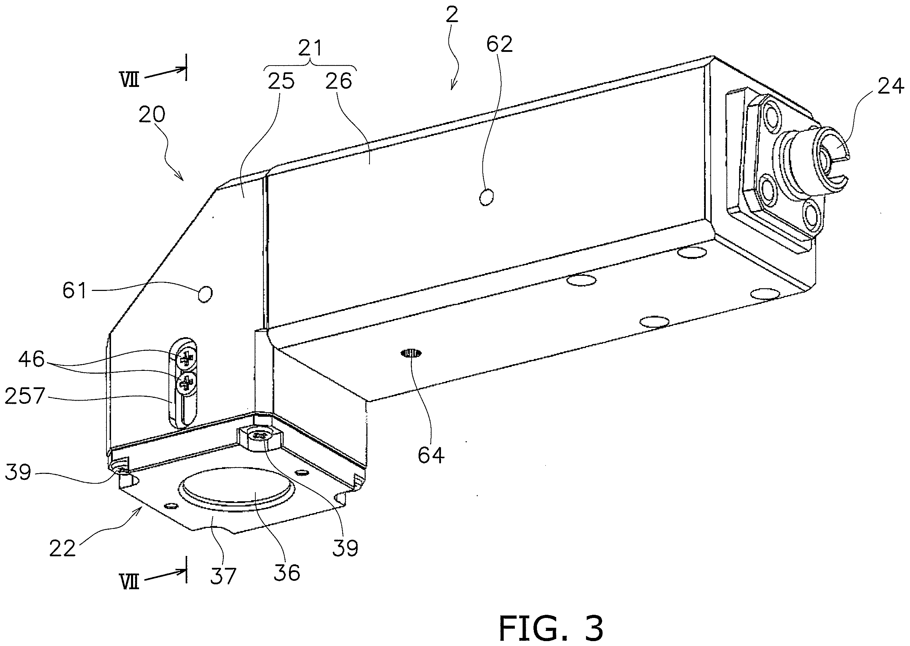

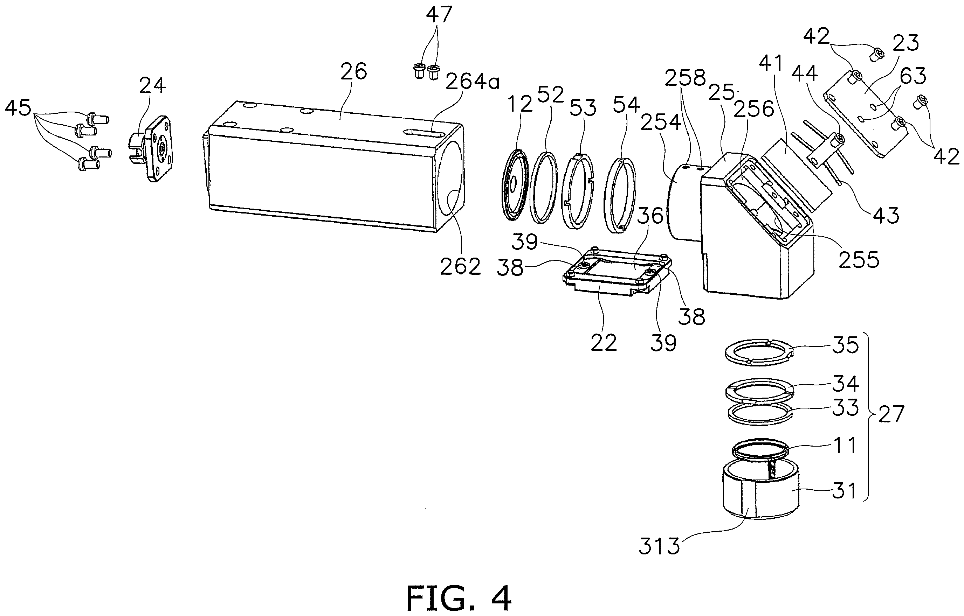

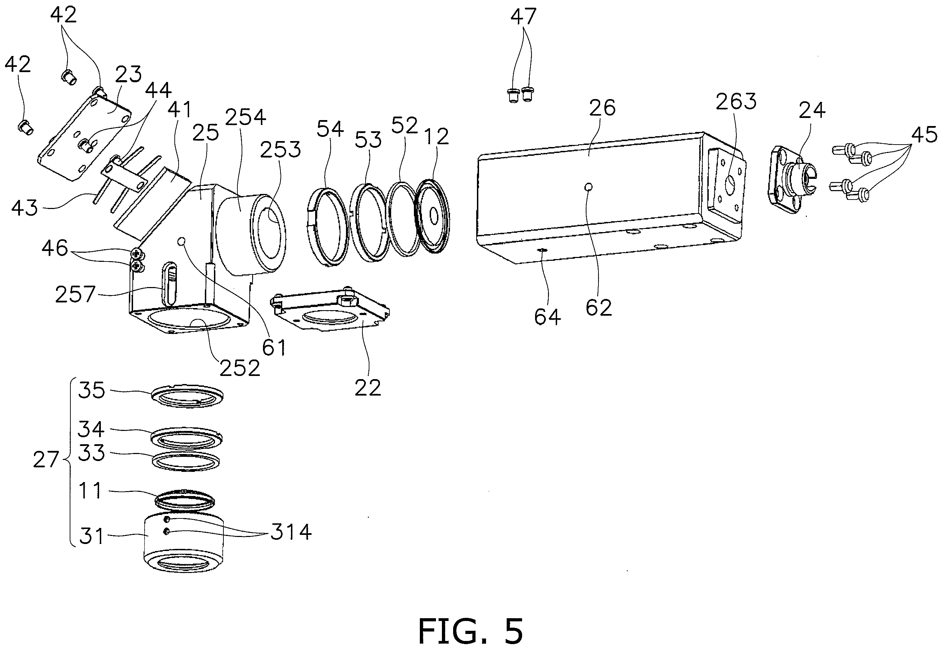

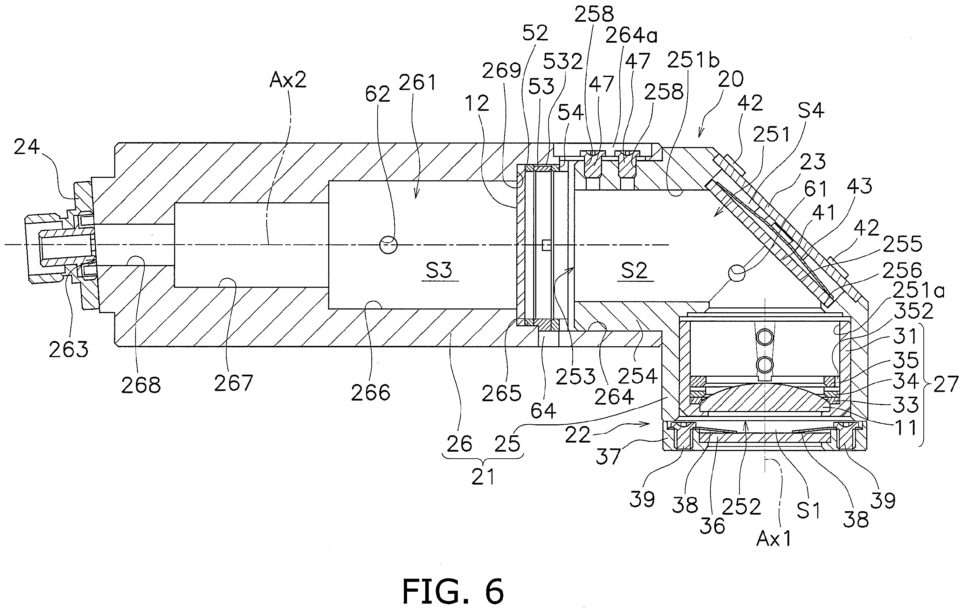

Next, the sensor head 2 is described in detail. FIG. 2 and FIG. 3 are perspective views of the sensor head 2 according to the first embodiment. FIG. 4 and FIG. 5 are exploded views of the sensor head 2. FIG. 6 is a cross-sectional view along the line VI-VI in FIG. 2. The sensor head 2 includes a housing 20 as illustrated in FIG. 2 and FIG. 3.

The housing 20 contains the first lens 11 and the second lens 12 described above. The first lens 11 and the second lens 12 are arranged inside the housing 20.

The sensor head 2 in the first embodiment has a bent shape, and thus the optical axis is also bent within the sensor head 2. In the following explanation, the direction parallel to the optical axis Ax1 of the first lens 11 is called the "first axis direction Ax1" as illustrated in FIG. 6. In addition, the direction parallel to the optical axis Ax2 of the second lens 12 is called the "second axis direction Ax2" as illustrated in FIG. 6. In the first embodiment, the first axis direction Ax1 is orthogonal to the second axis direction Ax2. However, the angle between the first axis direction Ax1 and the second axis direction Ax2 is not limited to 90 degrees, and may be an angle other than 90 degrees.

As illustrated in FIG. 2 and FIG. 3, the housing 20 includes a housing body 21, a first cover part 22, a second cover part 23, and a connector 24. The first cover part 22, the second cover part 23, and the connector 24 are attached to the housing body 21. The housing body 21 has a bent shape. The housing body 21 includes a first housing part 25 and a second housing part 26. As illustrated in FIG. 4 and FIG. 5, the first housing part 25 and the second housing part 26 are separate from each other.

As illustrated in FIG. 6, the first housing part 25 has a bent shape relative to the first axis direction Ax1. A first internal passage 251 is provided inside the first housing part 25. The first internal passage 251 has a bent shape. More specifically, the first internal passage 251 includes a first passage part 251a, and a second passage part 251b. The first passage part 251a extends along the first axis direction Ax1. The second passage part 251b extends along the second axis direction Ax2.

The first housing part 25 includes a first opening 252. The first opening 252 is connected to the first passage part 251a. The first opening 252 may be sealed may be closed off by the first cover part 22. The inner diameter of the first passage part 251a is larger than the inner diameter of the second passage part 251b. The first passage part 251a accommodates the first lens 11. More specifically, the first passage part 251a accommodates a first lens unit 27.

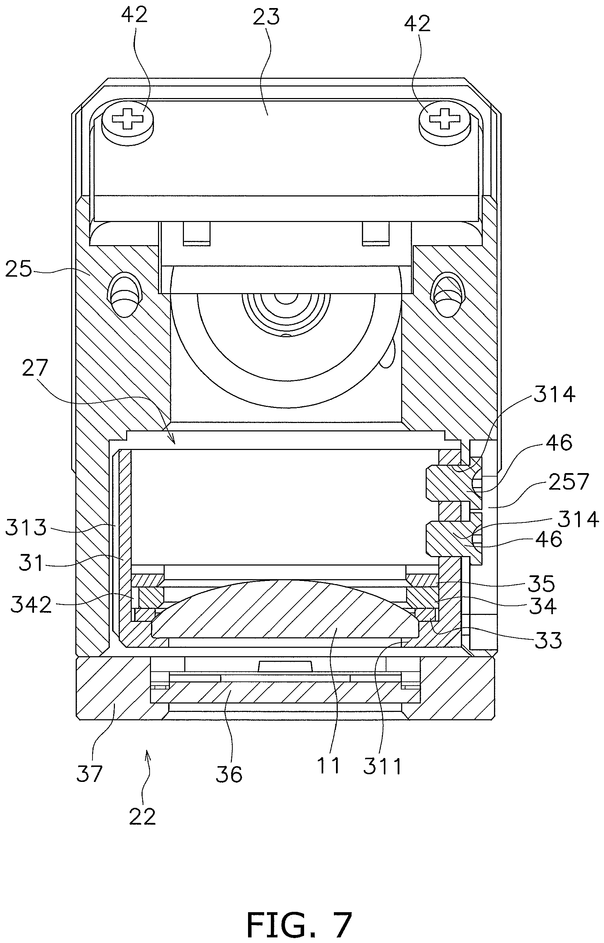

As illustrated in FIGS. 4 to 6, the first lens unit 27 includes a lens holder 31, the above described first lens 11, a first lens ring 33, a first lens fitting part 34, and a third lens fitting part 35. The lens holder 31 is cylindrical in shape. The first lens 11 is arranged inside the lens holder 31. The lens holder 31 is located between the inner surface of the first housing part 25 and the first lens 11, and holds the first lens 11. FIG. 7 is a cross-sectional view along the line VII-VII in FIG. 3. As illustrated in FIG. 7, the lens holder 31 includes a flange part 311 protruding radially inward.

The first lens fitting part 34 and the third lens fitting part 35 are each ring-shaped. The first lens fitting part 34 and the third lens fitting part 35 are separate from each other. The first lens ring 33 is arranged between the first lens 11 and the first lens fitting part 34. The first lens fitting part 34 and the third lens fitting part 35 secure the first lens 11 to the lens holder 31.

The outer peripheral surfaces of the first lens fitting part 34 and the third lens fitting part 35 are each provided with male screws. The inner peripheral surface of the above-described lens holder 31 is provided with a female screw. When the male screw of the first lens fitting part 34 and the third lens fitting part 35 engages with the female screw of the lens holder 31, the first lens 11 and the first lens ring 33 are held between the first lens fitting part 34 and the flange part 311. The first lens 11 and lens holder 31 are thusly secured.

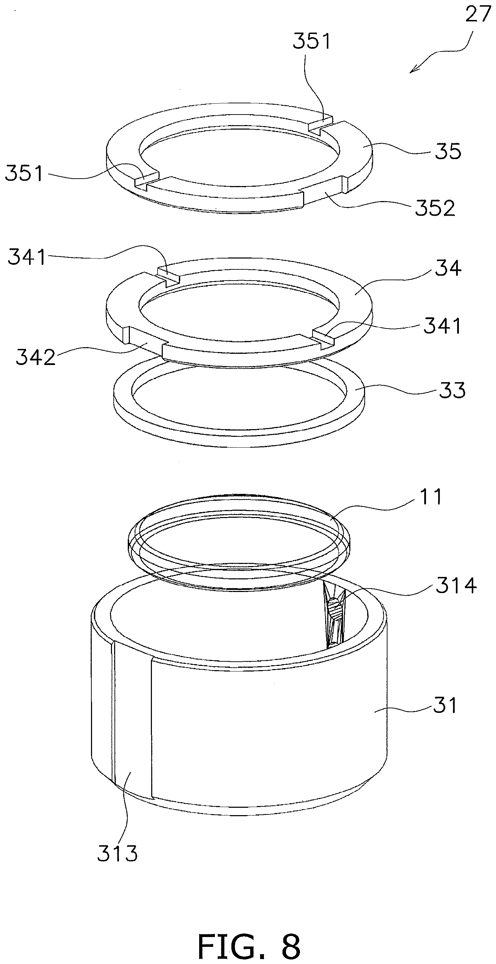

FIG. 8 is an exploded perspective view of the first lens unit 27. As illustrated in FIG. 8, the first lens fitting part 34 is provided with a locking recess 341. The first lens fitting part 34 may be rotated by fitting a tool into the locking recess 341. The third lens fitting part 35 is also provided with a locking recess 351.

As illustrated in FIG. 5 and FIG. 7, the lens holder 31 is provided with a screw hole 314 in the side surface thereof. A slit 257 is also provided in the side surface of the first housing part 25. A screw 46 passes through the slit 257 in the first housing part 25 and the screw hole 314 in the lens holder 31 to secure the lens holder 31 to the first housing part 25.

A first communicating part 313 is provided in the side surface of the lens holder 31 as illustrated in FIG. 7 and FIG. 8. The first communicating part 313 is a groove provided in the outer peripheral surface of the lens holder 31 extending along the central axis direction of the lens holder 31. Namely, the first communicating part 313 extends along the first axis direction Ax1 in the outer peripheral surface of the lens holder 31.

As illustrated in FIG. 8, the first lens fitting part 34 is provided with a second communicating part 342. The second communicating part 342 is a groove provided in the outer peripheral surface of the first lens fitting part 34 extending along the central axis direction of the first lens fitting part 34. Namely, the second communicating part 342 extends along the first axis direction Ax1 in the outer peripheral surface of the first lens fitting part 34.

The third lens fitting part 35 is provided with a fourth communicating part 352. The fourth communicating part 352 is a groove provided in the outer peripheral surface of the third lens fitting part 35 extending along the central axis direction of the third lens fitting part 35. Namely, the fourth communicating part 352 extends along the first axis direction Ax1 in the outer peripheral surface of the third lens fitting part 35.

The first cover part 22 is attached to the first housing part 25. The first cover part 22 is arranged to cover the first lens 11. As illustrated in FIG. 6 and FIG. 7, the first cover part 22 includes a transparent member 36 and a supporting part 37; as is later described, the transparent member 36 is made of a transparent material such as glass. The transparent member 36 has a panel-like shape. The transparent member 36 is arranged to intersect with the optical axis. More specifically, the transparent member 36 is arranged to intersect with the optical axis of the first lens 11. The transparent member 36 is arranged orthogonal to the first axis direction Ax1.

The support member 37 supports the transparent member 36. More specifically, the support member 37 supports the outer edge of the transparent member 36. As illustrated in FIG. 4 and FIG. 6, the first cover part 22 includes a first elastic member 38. The first elastic member is secured to the support member 37 via a screw 39. The first elastic member presses the transparent member 36 toward the support member 37 to secure the transparent member 36 to the support member 37.

The first housing part 25 also includes a second opening 253 as illustrated in FIGS. 4 to 6. The second opening 253 is connected to the second housing part 26. The first housing part 25 includes a first connecting part 254. The first connecting part 254 is cylindrical. The first connecting part 254 protrudes in the second axis direction Ax2. The second opening 253 is provided in the first connecting part 254. The second passage part 251b is arranged to pass through the inside of the first connecting part 254. The first connecting part 254 is provided with a screw hole 258. The first connecting part 254 is inserted inside of and secured to the second housing part 26.

The first housing part 25 includes a third opening 255. The third opening 255 connects to the first internal passage 251. The first internal passage 251 has a bent shape between the first passage part 251a and the second passage part 251b. The third opening 255 is provided in the bent part of the first internal passage 251.

The sensor head 2 includes a mirror member 41. The mirror member 41 closes off the third opening 255. The mirror member 41 bends the optical axis. The mirror member 41 has a panel-like shape. The mirror member 41 is arranged inclined with respect to the first axis direction Ax1, and the second axis direction Ax2.

The first housing part 25 includes a mirror support part 256. The mirror support part 256 is provided to surrounding the third opening 255. The second cover part 23 is arranged to cover the mirror member 41. The second cover part 23 is fixed to the second housing part 26 using a screw 42. The sensor head 2 includes a second elastic member 43. The second elastic member 43 is arranged between the mirror member 41 and the second cover part 23. The second elastic member 43 is secured to the second housing part 26 using a screw 44. The second elastic member 43 pushes the mirror member 41 toward the mirror support part 256 to secure the mirror member 41 to the mirror support part 256.

The second housing part 26 has a substantially rectangular parallelepiped shape extending along the second axis direction Ax2. A second internal passage 261 is provided inside the second housing part 26. The second internal passage 261 passes through the second housing part 26 in the second axis direction Ax2. As illustrated in FIG. 4 to FIG. 6, the second housing part 26 includes a first opening 262 and a second opening 263. The first opening 262 is provided on one end surface of the second housing part 26 in the second axis direction Ax2. The second opening 263 is provided on the other end surface of the second housing part 26 in the second axis direction Ax2. The second internal passage 261 connects the first opening 262 and the second opening 263. The first housing part 25 is connected to the first opening 262. The second opening 263 may be closed off by a connector 24. The connector 24 is secured to the second housing part 26 using a screw 45. The above-described cable member 3 is attached to the connector 24.

As illustrated in FIG. 6, the second internal passage 261 has a shape where the internal diameter thereof changes gradually along the second axis direction Ax2. More specifically, the second internal passage 261 includes a second connecting part 264 and a second lens storage part 265. The second connecting part 264 connects to the first opening 262. The internal diameter of the second connecting part 264 is greater than the internal diameter of the second lens storage part 265. The second connecting part 264 is located between the first opening 262 and the second lens storage part 265. The second lens 12 is stored in the second lens storage part 265.

The second internal passage 261 includes a first inner part 266, a second inner part 267, and a third inner part 268. The second connecting part 264, the second lens storage part 265, the first inner part 266, the second inner part 267, and the third inner part 268 are arranged in this order from the first opening 262 to the second opening 263.

The internal diameter of the first inner part 266 is smaller than the internal diameter of the second lens storage part 265. Therefore, a stepped part 269 is provided between the first inner part 266 and the second lens storage part 265. The second inner part 267 is located between the first inner part 266, and the third inner part 268. The internal diameter of the second inner part 267 is smaller than the internal diameter of the first inner part 266. The internal diameter of the third inner part 268 is smaller than the internal diameter of the second inner part 267. The third inner part 268 connects to the second opening 263.

The second connecting part 264 is provided with a slotted hole 264a. The slotted hole 264a of the second connecting part 264 and the screw hole 258 in the above-described first connecting part 254 receives a screw 47 therethrough so that the first connecting part 254 and the second connecting part 264 are secured to each other. The first housing part 25 and the second housing part 26 are thusly secured to each other.

The sensor head 2 includes a second lens ring 52, a second lens fitting part 53, and a fourth lens fitting part 54. The second lens ring 52 is arranged between the second lens 12 and the second lens fitting part 53. The second lens fitting part 53 and the fourth lens fitting part 54 are each ring-shaped. The second lens fitting part 53 and the fourth lens fitting part 54 are separate from each other. The second lens fitting part 53 and the fourth lens fitting part 54 secure the second lens 12 to the second housing part 26.

The outer peripheral surfaces of the second lens fitting part 53 and the fourth lens fitting part 54 are each provided with male screws. A female screw is provided on the inner peripheral surface of the above described second lens storage part 265. When the male screw of the second lens fitting part 53 and the fourth lens fitting part 54 engages with the female screw of the second lens storage part 265, the second lens 12 and the second lens ring 52 are held between the second lens fitting part 53 and the stepped part 269. The second lens 12 is thus secured to the second housing part 26.

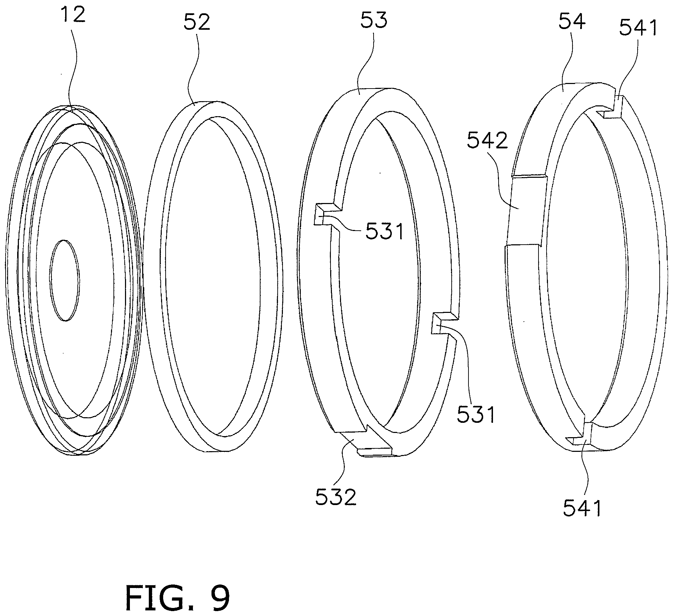

The second lens fitting part 53 and the fourth lens fitting part 54 have a shape similar to the above describes first lens fitting part 34 and third lens fitting part 35. FIG. 9 is an exploded perspective view illustrating the second lens 12, the second lens ring 52, the second lens fitting part 53, and the fourth lens fitting part 54. As illustrated in FIG. 9, the second lens fitting part 53 is provided with a locking recess 531. The second lens fitting part 53 may be rotated by fitting a tool into the locking recess 531. The fourth lens fitting part 54 may also be provided with the same manner of locking recess 541 as the second lens fitting part 53.

The second lens fitting part 53 is provided with a third communicating part 532. The third communicating part 532 is a groove provided in the outer peripheral surface of the second lens fitting part 53 extending along the central axis direction of the second lens fitting part 53. Namely, the third communicating part 532 extends along the second axis direction Ax2 in the outer peripheral surface of the second lens fitting part 53.

The fourth lens fitting part 54 is provided with a fifth communicating part 542. The fifth communicating part 542 is a groove provided in the outer peripheral surface of the fourth lens fitting part 54 extending along the central axis direction of the fourth lens fitting part 54. Namely, the fifth communicating part 542 extends along the second axis direction Ax2 in the outer peripheral surface of the fourth lens fitting part 54.

As illustrated in FIG. 6, the internal space in the housing 20 is partitioned into a plurality of spaces. The housing 20 includes an optical path space S1 - S3 through which light passes. More specifically, the above described first internal passage 251, the second internal passage 261, and the first cover part 22 together form the optical path space S1 - S3 inside the housing 20 through which light passes. The first lens 11 and the second lens 12 partitions the optical path space S1 - S3 into a first optical path space S1, a second optical path space S2, and a third optical path space S3. The first optical path space S1 and the second optical path space S2 are partitioned by the first lens 11. The second optical path space S2 and the third optical path space S3 are partitioned by the second lens 12. In addition, the mirror member 41 partitions the internal space in the housing 20 into the optical path space S1 - S3, and an exoptical path space S4. The expotial path space S4 is a path space that is not the optical path space S1 - S3.

The first optical path space S1 is located between the first cover part 22 and the first lens 11. The second optical path space S2 is located between the first lens 11 and the second lens 12. The second optical path space S2 is provided inside the first internal passage 251. The third optical path space S3 is located between the second lens 12 and the connector 24. The third optical path space S3 is provided inside the second internal passage 261. The exoptical path space S4 is located between the mirror member 41 and the second cover part 23.

The sensor head 2 according to the embodiment is provided with a through hole and a communicating part so that each space S1 - S4 does not become an airtight space. More specifically, the first housing part 25 is provided with a first through hole 61. The first through hole 61 is provided to communicate with the second optical path space S2. The first through hole 61 passes through the housing 20 in a direction intersecting with a direction parallel to the optical axis. That is, the first through hole 61 passes through the housing 20 in a direction intersecting with the first axis direction Ax1 and the second axis direction Ax2.

The second housing part 26 is provided with a second through hole 62. The second through hole 62 is provided to communicate with the third optical path space S3. The second through hole 62 passes through the housing 20 in a direction intersecting with a direction parallel to the optical axis. That is, the second through hole 62 passes through the housing 20 in a direction intersecting with the first axis direction Ax1 and the second axis direction Ax2.

The second housing part 26 is provided with a fourth through hole 64. The fourth through hole 64 is provided at a location facing the second lens fitting part 53. The fourth through hole 64 is also provided at a location facing the fourth lens fitting part 54. More specifically, the fourth through hole 64 is provided in a section where the female screw is provided in the second lens storage part 265. The fourth through hole 64 passes through the housing 20 in a direction intersecting with the second axis direction Ax2.

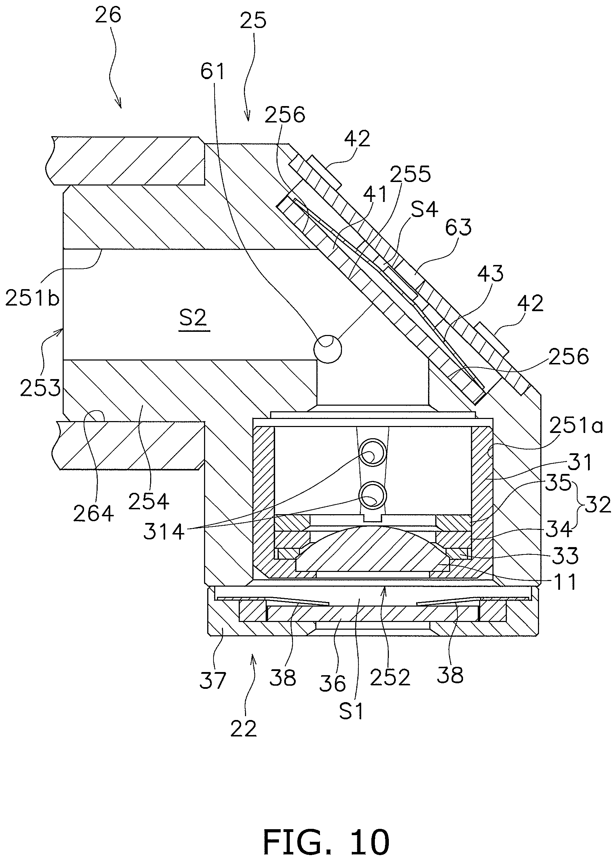

As illustrated in FIG. 2 and FIG. 4, the second cover part 23 is provided with a third through hole 63. FIG. 10 is a cross-sectional view through the third through hole 63. As illustrated in FIG. 10, the third through hole 63 communicates with the exoptical path space S4.

There are no through holes provided in the housing 20 that communicate with the first optical path space S1. Namely there are no through holes provided in the first cover part 22 that communicate with the first optical path space S1. However, the first optical path space S1 and the second optical path space S2 communicate via the first communicating part 313 in the above described lens holder 31.

In addition, the second communicating part 342 in the first lens fitting part 34 and the fourth communicating part 352 in the third lens fitting part 35 communicates a gap with the second optical path space S2. The gap is created by the lens holder 31, the first lens 11, the lens ring 33, the first lens fitting part 34, and the third lens fitting part 35 being fitted together. The third communicating part 532 in the second lens fitting part 53 and the fifth communicating part 542 in the fourth lens fitting part 54 communicates a gap with the second optical path space S2. The gap is created by the housing 20, the second lens 12, the second lens ring 52, the second lens fitting part 53, and the fourth lens fitting part 54 being fitted together.

Finally, the second optical path space S2 communicates with the external vacuum via the third communicating part 532 in the second lens fitting part 53, the fifth communicating part 542 in the fourth lens fitting part 54, and the fourth through hole 64.

Note, the constituent parts of the sensor head 2 are preferably made up of materials that emission amount of outgas is small. For example, the housing 20, the lens holder 31, and the connector 24 are preferably made from metal which emits a small amount of outgas. The housing 20 is made from an aluminum alloy for instance, but may be made from some other material. The lens holder 31, and the connector 24 are made from stainless steel for instance, but may be made from some other material. The above described various types of screws are also preferably made from metal, such as stainless steel, which emits a small amount of outgas.

The first lens 11, the second lens 12, and the mirror member 41, and the transparent member 36 are made from glass, for instance, but may be made from some other material. The first lens ring 33, and the second lens ring 52 are preferably made from a resin which emits a small amount of outgas. For example, the first lens ring 33 and the second lens ring 52 are made from a fluororesin, such as polytetrafluoroethylene (PTFE), but may be made from some other material.

Additionally, in terms of suppressing outgas emissions, each constituent part is preferably attached without the use of an adhesive agent. Reason being, when evacuating the chamber the adhesive agent may generate outgas, and this generated outgas tends to impede the increase in the degree of vacuum, or may affect the accuracy of any film formation. For example, the first housing part 25 and the second housing part 26 are each preferably formed as single components using die casting or cutting. Thus the first housing part 25 and the second housing part 26 may be secured to each other with a screw 47 without using an adhesive agent. Note, information such as the serial number and the like are preferably stamped on the housing 20 by marking process.

The first cover part 22, the second cover part 23, and the connector 24 are each secured to the housing 20 using the screws 39, 42, 45 without using an adhesive agent. Additionally the transparent member 36 may be attached to the support member 37 using the first elastic member 38 without using an adhesive agent. The mirror member 41 may be attached to the housing 20 using the second elastic member 43 without using an adhesive agent.

As above described, a sensor head 2 according to the embodiment is provided with a first through hole 61, a second through hole 62, and a third through hole 63 in the housing 20 to avoid creating an airtight space inside the housing 20. Accordingly, the second optical path space S2 inside the housing 20 communicates with the external vacuum via the first through hole 61. The third optical path space S3 inside the housing 20 communicates with the external vacuum via the second through hole 62. The exoptical path space S4 communicates with the external vacuum via the third through hole 63. The first optical path space S1 also communicates with the second optical path space S2 via the first communicating part 313. This reduces the pressure the vacuum exerts on the housing 20. Highly accurate measurements may thus be carried out under a vacuum environment.

For measurement devices using a confocal optical system in particular, the shape of the housing 20 and the location of each constituent part must be highly precise. The sensor head 2 according to the embodiment suppresses the pressure exerted on the housing 20 by the vacuum, and is capable of fulfilling the above-mentioned type of highly precise requirements.

While the first through hole 61 and the second through hole 62 communicate with the optical path space, the through holes 61, 62 pass through the housing 20 in a direction intersecting with the optical axis. Therefore, light entering into the housing 20 from the outside through the first through hole 61 and the second through hole 62 exerts little effect on the measurement. This prevents the measurement accuracy from decreasing even when the housing 20 is provided with the first through hole 61 and the second through hole 62.

Given that the mirror member 41 partitions the exoptical path space S4 from the optical path space, the light entering into the exoptical path space S4 from the outside through the third through hole 63 has little effect on measurement. This prevents the measurement accuracy from decreasing even when the third through hole 63 is provided in the second cover part 23.

The first optical path space S1 communicates with the second optical path space S2 via the first communicating part 313. Therefore, the first optical path space S1 may communicate with the external vacuum without having to provide a through hole in the first cover part 22 for the first optical path space S1 to communicate with an external space. The first cover part 22 is a light receiving surface for receiving the light reflected from the measurement object. The first cover part 22 is a light projecting surface allowing light emitted to the measurement object to pass therethrough. Accordingly, the effect the light entering from each of the through holes has on the measurement can be suppressed by providing the first through hole 61 and the second through hole 62 in the housing body 21 without having to provide a through hole in the first cover part 22. A decrease in the measurement accuracy can thus be suppressed.

The first communicating part 313 is a groove provided in the outer peripheral surface of the lens holder 31. Therefore, a simply structured lens holder 31 can be used to communicate the first optical path space S1 and the second optical path space S2.

The first lens fitting part 34 secures the first lens 11 with screw structure. The second lens fitting part 53 similarly secures the second lens 12 with screw structure. Therefore, the first lens 11 and the second lens 12 may be secured without the use of an adhesive agent. Thus, the generation of outgas in the vacuum environment can be suppressed compared to when the first lens 11 in the second lens 12 are secured by an adhesive material.

The gap created by fitting together the first lens 11, the first lens ring 33, the first lens fitting part 34, and the third lens fitting part 35, communicates with the second optical path space S2 via the second communicating part 342 and the fourth communicating part 352. Therefore the gap created by fitting together the first lens 11, the first lens ring 33, the first lens fitting part 34, and the third lens fitting part 35 can be made a vacuum via the second communicating part 342 and the fourth communicating part 352.

The gap created by fitting together the second lens 12, the second lens ring 52, the second lens fitting part 53, and the fourth lens fitting part 54 communicates with the second optical path space S2 via the third communicating part 532 and the fifth communicating part 542. Therefore the gap created by fitting together the second lens 12, the second lens ring 52, the second lens fitting part 53, and the fourth lens fitting part 54 can be made a vacuum via the third communicating part 532 and the fifth communicating part 542.

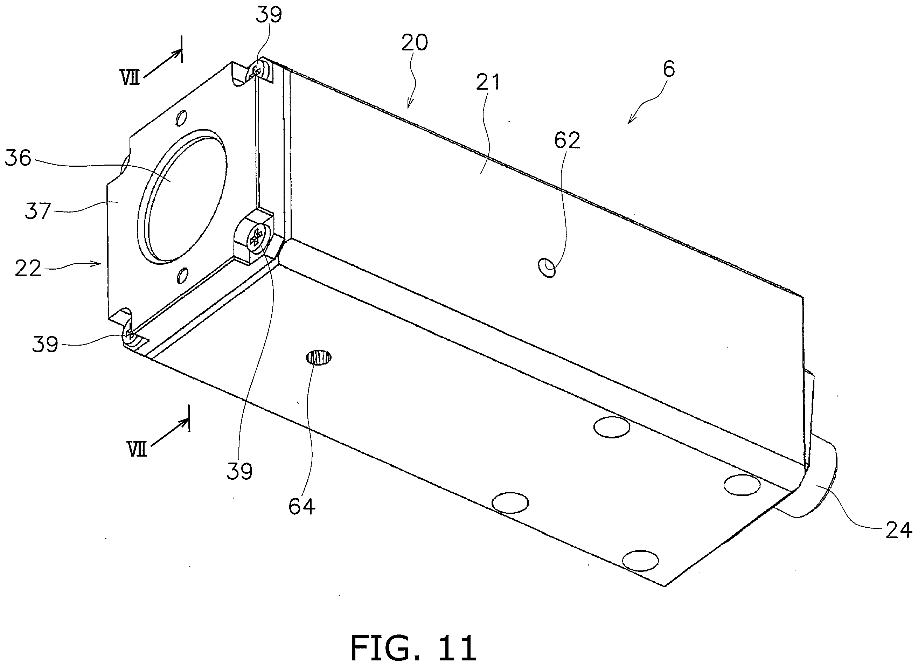

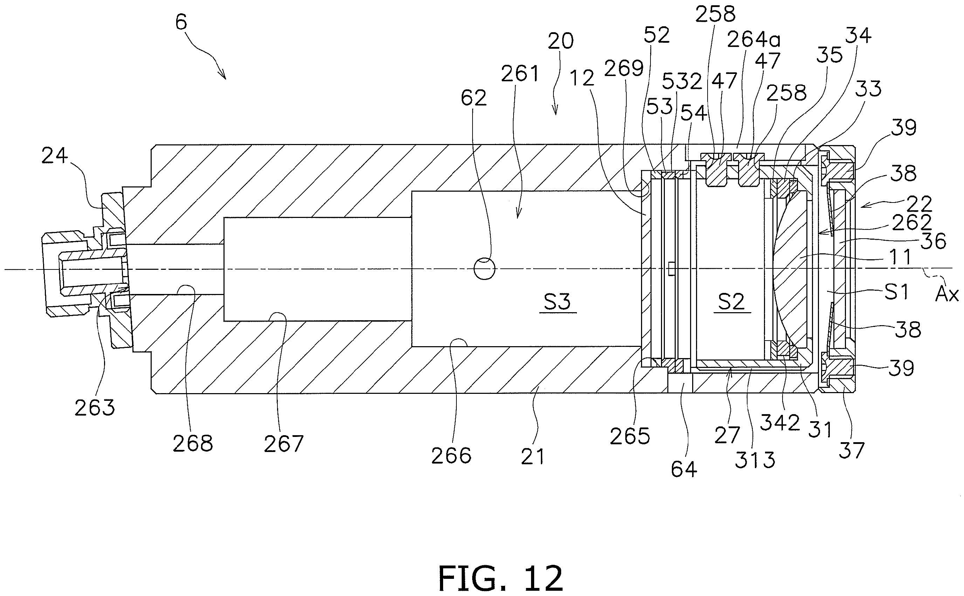

The above-mentioned first embodiment presents an example of a side view sensor head where the optical axis inside the sensor head 2 is bent; however, the sensor head is not limited to this type and for example, the invention may be adopted in a straight sensor head. FIG. 11 is a perspective view of a sensor head 6 according to a second embodiment. FIG. 12 is a cross-sectional view along the line XII-XII in FIG. 11. As illustrated in FIG. 12, the optical axis Ax inside the straight sensor head 6 is a straight line.

The sensor head 6 includes a housing 20, a first lens 11, a lens holder 31, and a second lens 12. The housing 20 includes a housing body 21, a first cover part 22, and a connector 24. The housing body 21 of the sensor head 6 is the same form as the second housing part 26 of the sensor head 2 according to the first embodiment. A portion of the configuration of the sensor head 6 has the same configuration as the sensor head 2 according to the first embodiment. Therefore, the sections of the sensor head 6 according to the second embodiment corresponding to sections in the sensor head 2 according to the first embodiment are given the same reference numerals.

The first cover part 22 is attached to cover the first opening 262 in the housing body 21. The housing body 21 accommodates the first lens 11 and the second lens 12. The optical axis of the first lens 11 and the optical axis of the second lens 12 are arranged along the same axis. Similar to the first embodiment, the first lens 11 is secured to the lens holder 31 using the first lens fitting part 34 and the third lens fitting part 35. The second lens 12 is secured to the housing body 21 using the second lens fitting part 53 and the fourth lens fitting part 54.

The lens holder 31 is arranged inside the housing body 21. The lens holder 31 is provided with a first communicating part 313. A screw 47 passes through a slotted hole 264a in the housing body 21 and the screw hole 258 in the lens holder 31 to secure the lens holder 31 to the housing body 21.

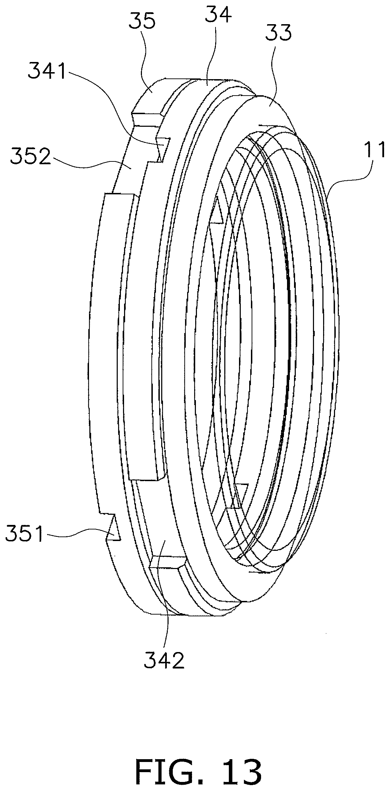

FIG. 13 is a perspective view illustrating the first lens 11, the first lens ring 33, the first lens fitting part 34, and the third lens fitting part 35. As illustrated in FIG. 13, the first lens fitting part 34 is provided with a second communicating part 342. The third lens fitting part 35 is provided with a fourth communicating part 352.

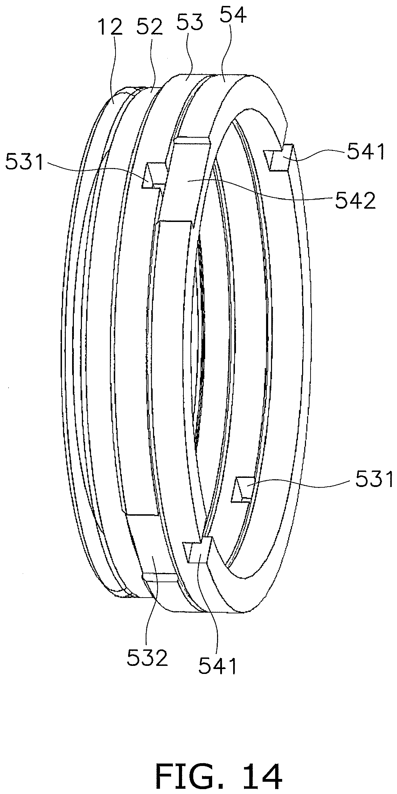

FIG. 14 is a perspective view illustrating the second lens 12, the second lens ring 52, the second lens fitting part 53, and the fourth lens fitting part 54. As illustrated in FIG. 14, the second lens fitting part 53 is provided with a third communicating part 532. The fourth lens fitting part 54 is provided with a fifth communicating part 542.

As illustrated in FIG. 12, the optical path space S1 - S3 inside the sensor head 6 is partitioned into a first optical path space S1, a second optical path space S2, and a third optical path space S3. The first optical path space S1 and the second optical path space S2 are partitioned by the first lens 11. The second optical path space S2 and the third optical path space S3 are partitioned by the second lens 12. The first optical path space S1 is located between the first cover part 22 and the first lens 11. The second optical path space S2 is located between the first lens 11 and the second lens 12. The third optical path space S3 is located between the second lens 12 and the connector 24. The first optical path space S1, the second optical path space S2, and the third optical path space S3 are aligned along a straight line.

The first optical path space S1 and the second optical path space S2 communicate with each other via the first communicating part 313. The housing body 21 is provided with a first through hole 61. The first through hole 61 is provided to communicate with the third optical path space S3. Accordingly, the third optical path space S3 communicates with the external vacuum via the first through hole 61.

The housing body 21 is also provided with a fourth through hole 64. The fourth through hole 64 is provided at a location facing the second lens fitting part 53 and the fourth lens fitting part 54. Accordingly, the second optical path space S2 communicates with the external vacuum via the fourth through hole 64.

Here ends the description of embodiments of the invention; the invention is not limited to the above-mentioned embodiments, and may be modified in various ways insofar as the modifications do not depart from the scope of the invention, which is defined by the appended claims.

In the first embodiment the optical measurement device 1 is a measurement device that measures the displacement of a measurement object using a confocal optical system. However, the optical measurement device 1 may use an optical system besides a confocal optical system. For instance, the optical measurement device 1 may use an interference spectroscopy-type optical system.

In the above-mentioned first embodiment the sensor head 2 includes both a light projecting and a light receiving function; however, the sensor head 2 may be configured to include only a light projecting or only a light receiving function.

In the above-mentioned embodiments the first lens 11 is secured to the housing 20 via the lens holder 31. However, the first lens 11 may be secured directly to the first lens fitting part 34 and secured to the housing 20 without using a lens holder 31.

The number and locations of the through holes are not limited to those exemplified in the above-mentioned embodiments. Similarly, the number and location of the communicating parts is not limited to those exemplified in the above-mentioned embodied.

For example, the third communicating part 532 in the second lens fitting part 53 may be excluded. The fifth communicating part 542 in the fourth lens fitting part 54 may also be excluded.

The second, third, fourth, and fifth communicating parts do not need to be grooves and have a shape except the groove. For example, the second communicating part may be a hole passing through the first lens fitting part 34. The third communicating part may be a hole passing through the third lens fitting part 35. The fourth communicating part may be a hole passing through the second lens fitting part 53. Finally, the fifth communicating part may be a hole passing through the fourth lens fitting part 54.

### INDUSTRIAL APPLICABILITY

The present invention proposes a sensor head used in an optical measurement device capable of highly accurate measurement even in a vacuum environment. Reference Signs List

- 20: Housing
- 11: First lens
- 61: First through hole
- 36: Transparent member
- 22: First cover part
- 21: Housing body
- S1: First optical path space
- S2: Second optical path space
- 31: Lens holder
- 313: First communicating part
- 33: First lens ring
- 34: First lens fitting part
- 342: Second communicating part
- S3: Third optical path space
- 12: Second lens
- 62: Second through hole
- 52: Second lens ring
- 53: Second lens fitting part
- 532: Third communicating part
- 41: Mirror member
- 23: Second cover part
- S4: Exoptical path space
- 63: Third through hole

## Claims

1. A sensor head (2) for an optical measurement device and for measurement in a vacuum, the sensor head (2) is configured to connect to a controller via a member that transmits light, the sensor head (2) comprising:
a housing (20); and
a first lens (11) arranged inside the housing (20); wherein
the housing (20) includes a first through hole (61) communicating with a space within the housing (20),
the housing (20) includes a second optical path space (S2) through which light passes;
the first through hole (61) communicates with the second optical path space (S2) and passes through the housing (20) in a direction intersecting with a direction parallel to an optical axis of the first lens (11);
the housing (20) includes:
a first cover part (22) covering the first lens (11) and including a transparent member (36) arranged intersecting with the optical axis of the first lens; and
a housing body (21) to which the first cover part (22) is attached;
the first through hole (61) is provided in the housing body (21);
the first lens (11) is arranged to partition the optical path space within the housing (20) into a first optical path space (S1) and the second optical path space (S2);
the first optical path space (S1) is located between the first cover part (22) and the first lens (11); and
the first through hole (61) is provided communicating with the second optical path space (S2);
the sensor head (2) further comprises:
a lens holder (31) arranged between an inner surface of the housing (20) and the first lens (11) for holding the first lens (11); wherein
the lens holder (31) includes a first communicating part (313) being a groove for communicating the first optical path space (SI) and the second optical path space (S2);
a first lens fitting part (34) having a ring shape for securing the first lens (11) to the lens holder (31);
a male screw provided on an outer peripheral surface of the first lens fitting part (34); and
a female screw provided on an inner peripheral surface of the lens holder (31); wherein
fastening together the male screw of the first lens fitting part (34) and the female screw of the lens holder (31) secures the first lens (11) to the lens holder (31);
**characterized by**
a first lens ring (33) arranged between the first lens (11) and the first lens fitting part (34); wherein
the first lens fitting part (34) includes a second communicating part (342) for communicating a gap with the second optical path space (S2), the gap being created by the lens holder (31), the first lens (11), the first lens ring (33), and the first lens fitting part (34) being fitted together.

2. The sensor head (2) according to claim 1, wherein the first communicating part (313) is a groove provided in an outer peripheral surface of the lens holder (31) extending along a central axis direction of the lens holder (31).

3. A sensor head (2) for an optical measurement device and for measurement in a vacuum, the sensor head (2) is configured to connect to a controller via a member that transmits light, the sensor head (2) comprising:
a housing (20); and
a first lens (11) arranged inside the housing (20); wherein
the housing (20) includes a first through hole (61) communicating with a space within the housing (20);
the housing (20) includes a second optical path space (S2) through which light passes;
the first through hole (61) communicates with the second optical path space (S2) and passes through the housing (20) in a direction intersecting with a direction parallel to an optical axis of the first lens (11);
the housing (20) includes:
a first cover part (22) covering the first lens (11) and including a transparent member (36) arranged intersecting with the optical axis; and
a housing body (21) to which the first cover part (22) is attached;
the first through hole (61) is provided in the housing body (21);
the first lens (11) is arranged to partition the optical path space within the housing (20) into a first optical path space (S1) and the second optical path space (S2);
the first optical path space (S1) is located between the first cover part (22) and the first lens (11); and
the first through hole (61) is provided communicating with the second optical path space (S2);
the sensor head (2) further comprises:
a first lens fitting part (34) having a ring shape for securing the first lens (11) to the housing (20);
a male screw provided on an outer peripheral surface of the first lens fitting part (34); and
a female screw provided on an inner peripheral surface of the housing (20); wherein
fastening together the male screw of the first lens fitting part (34) and the female screw of the housing (20) secures the first lens (11) to the housing (20),
**characterized by**
a first lens ring (33) arranged between the first lens (11) and the first lens fitting part (34); wherein
the first lens fitting part (34) includes a second communicating part (342) for communicating a gap with the second optical path space (S2), the gap being created by the housing (20), the first lens (11), the first lens ring (33), and the first lens fitting part (34) being fitted together.

4. The sensor head (2) according to claim 3, wherein the second communicating part (342) is a groove provided in an outer peripheral surface of the first lens fitting part (34) extending along the central axis direction of the first lens fitting part (34).

5. The sensor head (2) according to any one of claims 1 to 4, further comprising: a second lens (12) partitioning the optical path space into the second optical path space (S2) and a third optical path space (S3); wherein
the housing (20) further including a second through hole (62) communicating with the third optical path space (S3).

6. The sensor head (2) according to claim 5, further comprising:
a second lens fitting part (53) having a ring shape for securing the second lens (12) to the housing (20);
a male screw provided on an outer peripheral surface of the second lens fitting part (53);
a female screw provided on an inner peripheral surface of the housing (20); wherein
fastening together the male screw of the second lens fitting part (53) and the female screw of the housing (20) secures the second lens (12) to the housing (20).

7. The sensor head (2) according to claim 6, further comprising a second lens ring (52) arranged between the second lens (12) and the second lens fitting part (53); wherein
the second lens fitting part (53) includes a third communicating part (532) for communicating a gap created by the second lens (12), the second lens ring (52), and the second lens fitting part (53) being fitted together.

8. The sensor head (2) according to claim 7, wherein the third communicating part (532) is a groove provided in an outer peripheral surface of the second lens fitting part (53) extending along the central axis direction of the second lens fitting part (53).

9. A sensor head (2) according to any one of claims 1 to 8, further comprising:
a mirror member (41) for bending the optical axis of the first lens; and
the housing (20) further including:
a second cover part (23) for covering the mirror member(41); wherein
the mirror member (41) is arranged to partition an exoptical path space (S4) and the second optical path space (S2), the exoptical path space (S4) is located between the mirror member (41) and the second cover part (23); and
the second cover part (23) includes a third through hole (63) communicating with the exoptical path space (S4).

10. The sensor head (2) according to any one of claims 1 to 9, wherein the optical measurement device is a confocal measurement device that measures the displacement of a measurement object using a confocal optical system.

## Patentansprüche

1. Sensorkopf (2) für eine optische Messvorrichtung und zur Messung im Vakuum, wobei der Sensorkopf (2) konfiguriert ist, mit einer Steuereinrichtung über ein Element verbunden zu werden, das Licht durchlässt, wobei der Sensorkopf (2) aufweist:
ein Gehäuse (20); und
eine erste Linse (11), die innerhalb des Gehäuses (20) angeordnet ist; wobei
das Gehäuse (20) ein erstes Durchgangsloch (61) aufweist, das mit einem Raum im Gehäuse (20) in Verbindung steht, das Gehäuse (20) einen zweiten Raum (S2) eines optischen Wegs aufweist, durch den Licht geht;
das erste Durchgangsloch (61) mit dem zweiten Raum (S2) des optischen Wegs in Verbindung steht und durch das Gehäuse (20) in eine Richtung geht, die sich mit einer Richtung parallel zu einer optischen Achse der ersten Linse (11) schneidet;
das Gehäuse (20) aufweist:
einen ersten Abdeckteil (22), der die erste Linse (11) abdeckt und eine transparentes Element (36) aufweist, das so angeordnet ist, dass es sich mit der optischen Achse der ersten Linse schneidet; und
einen Gehäusekörper (21), an dem der erste Abdeckteil (22) angebracht ist;
das erste Durchgangsloch (61) im Gehäusekörper (21) vorgesehen ist;
die erste Linse (11) so angeordnet ist, dass sie den Raum des optischen Wegs im Gehäuse (20) in einen ersten Raum (S1) des optischen Wegs und den zweiten Raum (S2) des optischen Wegs aufteilt;
der erste Raum (S1) des optischen Wegs zwischen dem ersten Abdeckteil (22) und der ersten Linse (11) angeordnet ist; und
das erste Durchgangsloch (61) so vorgesehen ist, dass es mit dem zweiten Raum (S2) des optischen Wegs in Verbindung steht;
der Sensorkopf (2) ferner aufweist:
einen Linsenhalter (31), der zwischen einer Innenseite des Gehäuses (20) und der ersten Linse (11) zum Halten der ersten Linse (11) angeordnet ist; wobei
der Linsenhalter (31) einen ersten Verbindungsteil (313) aufweist, der aus einer Nut zum Verbinden des ersten Raums (S1) des optischen Wegs und des zweiten Raums (S2) des optischen Wegs besteht;
einen ersten Linsenpassteil (34), der eine Ringform zum Befestigen der ersten Linse (11) am Linsenhalter (31) aufweist;
eine Außengewindeschraube, die an einer Außenumfangsfläche des erste Linsenpassteils (34) vorgesehen ist; und
eine Innengewindeschraube, die an einer Innenumfangsfläche des Linsenhalters (31) vorgesehen ist; wobei das aneinander Befestigen der Außengewindeschraube des ersten Linsenpassteils (34) und der Innengewindeschraube des Linsenhalters (31) die erste Linse (11) am Linsenhalter (31) befestigt;
**gekennzeichnet durch**
einen erste Linsenring (33), der zwischen der ersten Linse (11) und dem ersten Linsenpassteil (34) angeordnet ist; wobei
der erste Linsenpassteil (34) einen zweiten Verbindungsteil (342) zum Verbinden eines Spalts mit dem zweiten Raum (S2) des optischen Wegs aufweist, wobei der Spalt durch den Linsenhalter (31), die erste Linse (11), den ersten Linsenring (33) und den ersten Linsenpassteil (34) erzeugt wird, die zusammengefügt sind.

2. Sensorkopf (2) nach Anspruch 1, wobei der erste Verbindungsteil (313) eine Nut ist, die in einer Außenumfangsfläche des Linsenhalter (31) vorgesehen ist, die sich längs einer Mittelachsenrichtung des Linsenhalters (31) erstreckt.

3. Sensorkopf (2) für eine optische Messvorrichtung und zur Messung im Vakuum, wobei der Sensorkopf (2) konfiguriert ist, mit einer Steuereinrichtung über ein Element verbunden zu werden, das Licht durchlässt, wobei der Sensorkopf (2) aufweist:
ein Gehäuse (20); und
eine erste Linse (11), die innerhalb des Gehäuses (20) angeordnet ist; wobei
das Gehäuse (20) ein erstes Durchgangsloch (61) aufweist,
das mit einem Raum im Gehäuse (20) in Verbindung steht;
das Gehäuse (20) einen zweiten Raum (S2) eines optischen Wegs aufweist, durch den Licht geht;
das erste Durchgangsloch (61) mit dem zweiten Raum (S2) des optischen Wegs in Verbindung steht und durch das Gehäuse (20) in eine Richtung geht, die sich mit einer Richtung parallel zu einer optischen Achse der ersten Linse (11) schneidet;
das Gehäuse (20) aufweist:
einen ersten Abdeckteil (22), der die erste Linse (11) abdeckt und ein transparentes Element (36) aufweist, das so angeordnet ist, dass es sich mit der optischen Achse schneidet; und
einen Gehäusekörper (21), an dem der erste Abdeckteil (22) angebracht ist;
das erste Durchgangsloch (61) im Gehäusekörper (21) vorgesehen ist;
die erste Linse (11) so angeordnet ist, dass sie den Raum des optischen Wegs im Gehäuse (20) in einen ersten Raum (S1) des optischen Wegs und den zweiten Raum (S2) des optischen Wegs aufteilt;
der erste Raum (S1) des optischen Wegs zwischen dem ersten Abdeckteil (22) und der ersten Linse (11) angeordnet ist; und
das erste Durchgangsloch (61) so vorgesehen ist, dass es mit dem zweiten Raum (S2) des optischen Wegs in Verbindung steht;
der Sensorkopf (2) ferner aufweist:
einen ersten Linsenpassteil (34), der eine Ringform zum Befestigen der ersten Linse (11) am Gehäuse (20) aufweist;
eine Außengewindeschraube, die an einer Außenumfangsfläche des ersten Linsenpassteils (34) vorgesehen ist; und
eine Innengewindeschraube, die an einer Innenumfangsfläche des Gehäuses (20) vorgesehen ist; wobei
das aneinander Befestigen der Außengewindeschraube des ersten Linsenpassteils (34) und der Innengewindeschraube des Gehäuses (20) die erste Linse (11) am Gehäuse (20) befestigt,
**gekennzeichnet durch**
einen ersten Linsenring (33), der zwischen der ersten Linse (11) und dem ersten Linsenpassteil (34) angeordnet ist; wobei
der erste Linsenpassteil (34) einen zweiten Verbindungsteil (342) zum Verbinden eines Spalts mit dem zweiten Raum (S2) des optischen Wegs aufweist, wobei der Spalt durch das Gehäuse (20), die erste Linse (11), den ersten Linsenring (33) und den ersten Linsenpassteil (34) erzeugt wird, die zusammengefügt sind.

4. Sensorkopf (2) nach Anspruch 3, wobei der zweite Verbindungsteil (342) eine Nut ist, die in einer Außenumfangsfläche des ersten Linsenpassteils (34) vorgesehen ist, die sich längs einer Mittelachsenrichtung des ersten Linsenpassteils (34) erstreckt.

5. Sensorkopf (2) nach einem der Ansprüche 1 bis 4, der ferner aufweist: eine zweite Linse (12), die den Raum des optischen Wegs in den zweiten Raum (S2) des optischen Wegs und einen dritten Raum (S3) des optischen Wegs unterteilt; wobei
das Gehäuse (20) ferner ein zweites Durchgangsloch (62) aufweist, das mit dem dritten Raum (S3) des optischen Wegs in Verbindung steht.

6. Sensorkopf (2) nach Anspruch 5, der ferner aufweist:
einen zweiten Linsenpassteil (53), der eine Ringform zum Befestigen der zweiten Linse (12) am Gehäuse (20) aufweist;
eine Außengewindeschraube, die an einer Außenumfangsfläche des zweiten Linsenpassteils (53) vorgesehen ist;
eine Innengewindeschraube, die an einer Innenumfangsfläche des Gehäuses (20) vorgesehen ist; wobei
das aneinander Befestigen der Außengewindeschraube des zweiten Linsenpassteils (53) und der Innengewindeschraube des Gehäuses (20) die zweite Linse (12) am Gehäuse (20) befestigt.

7. Sensorkopf (2) nach Anspruch 6, der ferner einen zweiten Linsenring (52) aufweist, der zwischen der zweiten Linse (12) und dem zweiten Linsenpassteil (53) angeordnet ist; wobei
der zweite Linsenpassteil (53) einen dritten Verbindungsteil (532) zum Verbinden eines Spalts aufweist, der durch die zweite Linse (12), den zweiten Linsenring (52) und den zweiten Linsenpassteil (53) erzeugt wird, die zusammengefügt sind.

8. Sensorkopf (2) nach Anspruch 7, wobei der dritte Verbindungsteil (532) eine Nut ist, die in einer Außenumfangsfläche des zweiten Linsenpassteils (53) vorgesehen ist, die sich längs einer Mittelachsenrichtung des zweiten Linsenpassteils (53) erstreckt.

9. Sensorkopf (2) nach einem der Ansprüche 1 bis 8, der ferner aufweist:
ein Spiegelelement (41) zur Biegung der optischen Achse der ersten Linse; und
wobei das Gehäuse (20) ferner aufweist:
einen zweiten Abdeckteil (23) zum Abdecken des Spiegelelements (41); wobei
das Spiegelelement (41) so angeordnet ist, dass es einen Raum (S4) außerhalb des optischen Wegs und den zweiten Raum (S2) des optischen Wegs unterteilt, wobei der Raum (S4) außerhalb des optischen Wegs zwischen den Spiegelelement (41) und dem zweiten Abdeckteil (23) angeordnet ist; und der zweite Abdeckteil (23) ein drittes Durchgangsloch (63) aufweist, das mit dem Raum (S4) außerhalb des optischen Wegs in Verbindung steht.

10. Sensorkopf (2) nach einem der Ansprüche 1 bis 9, wobei die optische Messvorrichtung eine konfokale Messvorrichtung ist, die die Verschiebung eines Messobjekt mittels eines konfokalen optischen Systems misst.

## Revendications

1. Tête de capteur (2) pour un dispositif de mesure optique et pour la mesure dans un vide, ladite tête de capteur (2) étant prévue pour être reliée à un dispositif de commande par un élément transmetteur de lumière, ladite tête de capteur (2) comprenant :
un boîtier (20) ; et
une première lentille (11) disposée à l'intérieur du boîtier (20) ; où
le boîtier (20) présente un premier trou traversant (61) communiquant avec un espace à l'intérieur du boîtier (20),
le boîtier (20) présente un deuxième espace de chemin optique (S2) par où passe la lumière ;
le premier trou traversant (61) communique avec le deuxième espace de chemin optique (S2) et traverse le boîtier (20) dans une direction d'intersection avec une direction parallèle à un axe optique de la première lentille (11) ;
le boîtier (20) présente :
une première partie de couvercle (22) couvrant la première lentille (11) et comprenant un élément transparent (36) disposé en intersection avec l'axe optique de la première lentille ; et
un corps (21) de boîtier auquel la première partie de couvercle (22) est fixée ;
le premier trou traversant (61) étant prévu dans le corps (21) de boîtier ;
la première lentille (11) étant disposée pour partager l'espace de chemin optique à l'intérieur du boîtier (20) en un premier espace de chemin optique (S1) et un deuxième espace de chemin optique (S2) ;
le premier espace de chemin optique (S1) est disposé entre la première partie de couvercle (22) et la première lentille (11) ; et
le premier trou traversant (61) est prévu communiquant avec le deuxième espace de chemin optique (S2) ;
la tête de capteur (2) comprenant en outre :
un support (31) de lentille disposé entre une surface intérieure du boîtier (20) et la première lentille (11) pour maintenir la première lentille (11) ;
le support (31) de lentille comprenant une première section de communication (313) se présentant comme une rainure pour faire communiquer le premier espace de chemin optique (S1) et le deuxième espace de chemin optique (S2) ;
une première section d'ajustement (34) de lentille étant de forme annulaire pour fixer la première lentille (11) sur le support (31) de lentille ;
une vis mâle prévue sur une surface périphérique extérieure de la première section d'ajustement (34) de lentille ; et
une vis femelle prévue sur un surface périphérique intérieure du support (31) de lentille ;
le serrage de la vis mâle de la première section d'ajustement (34) de lentille avec la vis femelle du support (31) de lentille fixant la première lentille (11) sur le support (31) de lentille ;
**caractérisée par**
une première bague (33) de lentille disposée entre la première lentille (11) et la première section d'ajustement (34) de lentille ;
la première section d'ajustement (34) de lentille comprenant une deuxième section de communication (342) pour faire communiquer un interstice avec le deuxième espace de chemin optique (S2), ledit interstice étant créé par le support (31) de lentille, la première lentille (11), la première bague (33) de lentille et la première section d'ajustement (34) de lentille ajustées ensemble.

2. Tête de capteur (2) selon la revendication 1, où la première section de communication (313) est une rainure prévue dans une surface périphérique extérieure du support (31) de lentille s'étendant dans une direction d'axe central du support (31) de lentille.

3. Tête de capteur (2) pour un dispositif de mesure optique et pour la mesure dans un vide, ladite tête de capteur (2) étant prévue pour être reliée à un dispositif de commande par un élément transmetteur de lumière, ladite tête de capteur (2) comprenant :
un boîtier (20) ; et
une première lentille (11) disposée à l'intérieur du boîtier (20) ; où
le boîtier (20) présente un premier trou traversant (61) communiquant avec un espace à l'intérieur du boîtier (20) ;
le boîtier (20) présente un deuxième espace de chemin optique (S2) par où passe la lumière ;
le premier trou traversant (61) communique avec le deuxième espace de chemin optique (S2) et traverse le boîtier (20) dans une direction d'intersection avec une direction parallèle à un axe optique de la première lentille (11) ;
le boîtier (20) présente :
une première partie de couvercle (22) couvrant la première lentille (11) et comprenant un élément transparent (36) disposé en intersection avec l'axe optique ; et
un corps (21) de boîtier auquel la première partie de couvercle (22) est fixée ;
le premier trou traversant (61) étant prévu dans le corps (21) de boîtier ;
la première lentille (11) étant disposée pour partager l'espace de chemin optique à l'intérieur du boîtier (20) en un premier espace de chemin optique (S1) et un deuxième espace de chemin optique (S2) ;
le premier espace de chemin optique (S1) est disposé entre la première partie de couvercle (22) et la première lentille (11) ; et
le premier trou traversant (61) est prévu communiquant avec le deuxième espace de chemin optique (S2) ;
la tête de capteur (2) comprenant en outre :
une première section d'ajustement (34) de lentille, de forme annulaire pour fixer la première lentille (11) sur le boîtier (20) ;
une vis mâle prévue sur une surface périphérique extérieure de la première section d'ajustement (34) de lentille ; et
une vis femelle prévue sur une surface périphérique intérieure du boîtier (20) ;
le serrage de la vis mâle de la première section d'ajustement (34) de lentille avec la vis femelle du boîtier (20) fixant la première lentille (11) sur le boîtier (20), **caractérisée par**
une première bague (33) de lentille disposée entre la première lentille (11) et la première section d'ajustement (34) de lentille ; où
la première section d'ajustement (34) de lentille comprenant une deuxième section de communication (342) pour faire communiquer un interstice avec le deuxième espace de chemin optique (S2), ledit interstice étant créé par le boîtier (20), la première lentille (11), la première bague (33) de lentille et la première section d'ajustement (34) de lentille ajustées ensemble.

4. Tête de capteur (2) selon la revendication 3, où la deuxième section de communication (342) est une rainure prévue dans une surface périphérique extérieure de la première section d'ajustement (34) de lentille s'étendant dans la direction d'axe central de la première section d'ajustement (34) de lentille.

5. Tête de capteur (2) selon l'une des revendications 1 à 4, comprenant en outre : une deuxième lentille (12) partageant l'espace de chemin optique en un deuxième espace de chemin optique (S2) et un troisième espace de chemin optique (S3) ;
le boîtier (20) présentant en outre un deuxième trou traversant (62) communiquant avec le troisième espace de chemin optique (S3).

6. Tête de capteur (2) selon la revendication 5, comprenant en outre :
une deuxième section d'ajustement (53) de lentille, de forme annulaire pour fixer la deuxième lentille (12) sur le boîtier (20) ;
une vis mâle prévue sur une surface périphérique extérieure de la deuxième section d'ajustement (53) de lentille ;
une vis femelle prévue sur une surface périphérique intérieure du boîtier (20) ;
le serrage de la vis mâle de la deuxième section d'ajustement (53) de lentille avec la vis femelle du boîtier (20) fixant la deuxième lentille (12) sur le boîtier (20).

7. Tête de capteur (2) selon la revendication 6, comprenant en outre une deuxième bague (52) de lentille disposée entre la deuxième lentille (12) et la deuxième section d'ajustement (53) de lentille ;
la deuxième section d'ajustement (53) de lentille comprenant une troisième section de communication (532) pour faire communiquer un interstice créé par la deuxième lentille (12), la deuxième bague (52) de lentille et la deuxième section d'ajustement (53) de lentille ajustées ensemble.

8. Tête de capteur (2) selon la revendication 7, où la troisième section de communication (532) est une rainure prévue dans une surface périphérique extérieure de la deuxième section d'ajustement (53) de lentille s'étendant dans la direction d'axe central de la deuxième section d'ajustement (53) de lentille.

9. Tête de capteur (2) selon l'une des revendications 1 à 8, comprenant en outre :
un élément de miroir (41) pour fléchir l'axe optique de la première lentille ; et
le boîtier (20) comprenant en outre :
une deuxième partie de couvercle (23) pour couvrir l'élément de miroir (41) ; où
l'élément de miroir (41) est disposé pour partager un espace de chemin exoptique (S4) et le deuxième espace de chemin optique (S2), l'espace de chemin exoptique (S4) étant disposé entre l'élément de miroir (41) et la deuxième partie de couvercle (23) ; et
la deuxième partie de couvercle (23) présentant un troisième trou traversant (63) communiquant avec l'espace de chemin exoptique (S4).

10. Tête de capteur (2) selon l'une des revendications 1 à 9, où le dispositif de mesure optique est un dispositif de mesure confocale mesurant le déplacement d'un objet de mesure au moyen d'un système optique confocal.
